# FASCICULE DE BREVET EUROPEEN

(11) **EP 3 499 934 B1**
(45) Date de publication et mention de la délivrance du brevet: **06.05.2026**
(21) Numéro de dépôt: 18211750.7
(22) Date de dépôt: 11.12.2018
(51) Int. Cl.: H04L 9/08, H04L 9/32, H04W 12/04, H04W 12/50, H04W 84/18

(54) **MÉTHODE D APPAIRAGE DE TERMINAUX ÉLECTRONIQUES, TERMINAUX ET PROGRAMME CORRESPONDANT**
PAIRING-METHODE VON ELEKTRONISCHEN ENDGERÄTEN, ENTSPRECHENDE ENDGERÄTE UND ENTSPRECHENDES PROGRAMM
PAIRING METHOD FOR ELECTRONIC TERMINALS, TERMINALS AND CORRESPONDING PROGRAM

(30) Priorité: 12.12.2017 FR 1762011
(43) Date de publication de la demande: 19.06.2019
(73) Titulaire: Ingenico Group, Boston, MA 02110 (US)
(72) Inventeur: ROTSAERT, Christopher, 59290 WASQUEHAL (FR)
(74) Mandataire: Vidon Brevets & Stratégie

(56) Documents cités:
- WO-A1-2012/070036
- FR-A1- 2 985 148
- US-A1- 2014 281 547
- GAJBHIYE SAMTA ET AL: "Design, implementation and security analysis of Bluetooth pairing protocol in NS2", 2016 INTERNATIONAL CONFERENCE ON ADVANCES IN COMPUTING, COMMUNICATIONS AND INFORMATICS (ICACCI), IEEE, 21 September 2016 (2016-09-21), pages 1711 - 1717, XP032990033, DOI: 10.1109/ICACCI.2016.7732294

## Description

### 1. Domaine

L'invention se rapporte au domaine de l'authentification. L'invention se rapporte plus particulièrement à l'authentification matérielle de dispositifs entre eux.

### 2. État de la technique

Il est bien connu de l'état de la technique de nombreux protocoles qui permettent à deux dispositifs de s'authentifier préalablement à la transmission ou à l'échange d'informations confidentielles. Tel est par exemple le cas d'un terminal de communication sans fil qui souhaite s'authentifier sur un réseau local d'un utilisateur, par exemple un réseau sans fil wifi. Pour ce faire, préalablement à tout échange de données, le terminal doit s'authentifier sur le réseau de communication. Cette authentification passe généralement par une phase de saisie d'une clé, d'un mot de passe ou d'une phrase (passphrase). Un des problèmes avec ce type d'appairage est que les terminaux doivent nécessairement disposer des moyens de saisie de ces clés, mots de passe ou phrase

D'autres domaines nécessitent une authentification entre des dispositifs sans fils. Il en va ainsi par exemple des dispositifs qui communiquent par l'intermédiaire de la technologie Bluetooth^{®}. Bluetooth est une technologie sans fil pour créer des réseaux personnels sans fils fonctionnant dans la bande de fréquence de 2.4 GHz ne nécessitant pas d'autorisation, avec une portée maximum d'une dizaine de mètres. Les réseaux sont généralement composés de périphériques nomades comme les téléphones portables, les assistants personnels et les ordinateurs portables. Par défaut, une communication Bluetooth n'est pas authentifiée, et n'importe quel périphérique peut échanger des données avec n'importe quel autre périphérique.

Un périphérique Bluetooth (par exemple un téléphone portable) peut choisir de demander une authentification pour fournir un service particulier. L'authentification Bluetooth est généralement effectuée avec des *codes PIN.* A nouveau, ce type d'authentification nécessité de saisir une clé ou un code PIN, généralement sur les deux terminaux souhaitant communiquer.. Par défaut, L'utilisateur doit entrer le même code PIN sur les deux périphériques. Une fois que l'utilisateur a saisi le code PIN, les deux périphériques génèrent une *clé de liaison* (link key). Ensuite cette clé de liaison peut être enregistrée soit dans les périphériques eux-mêmes ou sur un moyen de stockage externe. Lors de l'échange suivant, les deux périphériques utiliseront la clé de liaison précédemment générée. Cette procédure est appelée *couplage.* La demande de brevet française N° 2 985 148 (N° d'enregistrement national 11 62408) divulgue un exemple de procédé d'appairage de dispositifs électroniques. Lorsque la clé de liaison est perdue par un des périphériques alors l'opération de couplage doit être répétée pour qu'une nouvelle clé puisse être générée.

Lorsque les données qui doivent être échangées entre les deux terminaux Bluetooth sont des données sensibles (comme des données bancaires par exemple), les échanges qui suivent la phase de couplage sont chiffrés, par exemple à l'aide de l'algorithme E0. E0 est l'algorithme de chiffrement à flot utilisé pour protéger la confidentialité des données échangées dans Bluetooth.

Le problème cependant est le même que pour la clé WEP ou la clé WPA : Il est nécessaire préalablement à tout échange chiffré, que l'utilisateur saisisse sur le terminal, le code PIN dont la longueur varie de 4 à 16 caractères, sachant que pour les applications les plus sécurisées, le code PIN à 16 caractères est préféré.

Or, une telle saisie se révèle impossible lorsqu'au moins un des deux terminaux ne comprend pas de clavier de saisie. L'ensemble de protocoles bluetooth, notamment, ne permet pas d'obtenir une connexion sécurisé entre deux terminaux lorsqu'au moins un de ces terminaux ne comprend pas de moyen de saisie du code PIN. Lorsque les deux terminaux possèdent des moyens de saisie, il s'ajoute également des problèmes de saisie de ceux-ci. Que ce soit pour la technologie WiFi ou pour la technologie Bluetooth, la saisie d'un code PIN ou d'une clé d'une longueur excessive entraine au moins deux de problèmes :
- d'une part un risque d'erreur lors de la saisie qui est important. En effet, il est quasiment assuré que la saisie comporte au moins une erreur. Ceci est particulièrement vrai lorsque la saisie s'effectue en caractère masqué (les caractères saisis ne sont pas affichés, mais à la place c'est une suite de caractères étoile qui est affichée) ;
- d'autre part, la saisie étant manuelle, rien n'assure qu'une personne malintentionnée n'espionne pas la saisie dans le but de s'approprier le code PIN ou la clé pour un usage frauduleux.

Des solutions de sécurisation ont été proposées, principalement pour la mise en œuvre d'une connexion Wi-Fi. Elles consistent en l'activation quasi simultanée des deux dispositifs à connecter ensemble. L'une de ces solutions est nommée « Wi-Fi Protected Setup (WPS) » et est un standard de réseau local sans fil simple et sécurisé. Cette solution ne règle cependant pas tous les problèmes, puisque l'une des variantes de WPS suppose la saisie d'un code PIN.

En d'autres termes, il est nécessaire de fournir une solution de connexion qui soit à la fois simple et discrète afin d'une part d'éviter les erreurs de saisie et d'autre part d'assurer la confidentialité des données nécessaires à la connexion ou à l'appairage.

### 3. Résumé

L'invention ne présente pas ces inconvénients de l'art antérieur. L'invention se rapporte à une méthode d'appairage d'un premier terminal, dit terminal de communication désirant transmettre et recevoir des données avec un deuxième terminal, dit terminal accepteur.

Selon la présente technique ladite méthode comprend, au niveau du terminal accepteur :
- une première phase d'appairage non sécurisée, dudit terminal transactionnel avec ledit terminal de communication, délivrant au moins un paramètre d'appairage audit terminal de communication, par l'intermédiaire d'un premier canal de communication sans fil bidirectionnel de type radio ;
- une deuxième phase d'appairage sécurisée, dudit terminal transactionnel avec ledit terminal de communication, ladite deuxième phase d'appairage mettant en œuvre un deuxième canal de communication unidirectionnel, utilisé par ledit terminal transactionnel pour transmettre une donnée de sécurisation dudit premier canal de communication audit terminal de communication, en fonction dudit au moins un paramètre d'appairage audit terminal de communication.

Ainsi, à la différence des méthodes d'appairages classique, qui utilisent essentiellement un seul canal de communication bidirectionnel de type radio par exemple pour réaliser un appairage, la présente technique permet de disposer d'un appairage sécurisé en deux temps : un premier temps permet de réaliser un appairage classique non sécurisé et ainsi obtenir un identifiant du terminal de communication tandis que la deuxième phase permet de réaliser un complément d'appairage, sécurisé, tenant compte de l'identifiant obtenu lors de la première phase d'appairage non sécurisée, en utilisant un canal de communication unidirectionnel. C'est bien la combinaison de ces deux phases d'appairage successives qui permet d'obtenir le résultat escompté, à savoir la sécurisation de la connexion (bluetooth par exemple) établie entre le premier terminal et le deuxième terminal, à partir d'une connexion initiale non sécurisée, et ce sans intervention humaine.

Selon la présente technique, la deuxième phase d'appairage comprend, au niveau du terminal accepteur :
- une étape de génération de la donnée de sécurisation dudit premier canal de communication ;
- une étape de transmission, par l'intermédiaire du deuxième canal de communication à usage unidirectionnel, de ladite donnée de sécurisation dudit premier canal de communication sous la forme d'une représentation ;
- une étape de génération d'un défi à l'aide de ladite donnée de sécurisation dudit premier canal de communication ;
- une étape de transmission, par l'intermédiaire du premier canal de communication, audit terminal de communication, dudit défi ;
- une étape de réception, par l'intermédiaire du premier canal de communication, d'une réponse audit défi en provenance du terminal de communication.

Selon la présente technique, la deuxième phase d'appairage comprend, au niveau du terminal de communication :
- une étape de réception, par l'intermédiaire du deuxième canal de communication à usage unidirectionnel, d'une représentation de ladite donnée de sécurisation dudit premier canal de communication ;
- une étape de décodage de ladite représentation délivrant ladite donnée de sécurisation dudit premier canal de communication,
- une étape de réception, par l'intermédiaire du premier canal de communication dudit défi ;
- une étape de résolution dudit défi à l'aide de ladite donnée de sécurisation dudit premier canal de communication, délivrant une ; et
- une étape de transmission, par l'intermédiaire du premier canal de communication, de la réponse audit défi.

Ainsi, dans cette deuxième phase d'appairage, la technique décrite permet de combiner les informations transmises via le deuxième canal de communication avec celles transmises via le premier canal de communication pour que le terminal transactionnel puisse établir une connexion sécurisée avec le terminal de communication. Lorsque le terminal transactionnel est à même de vérifier que le défi est relevé par le terminal de communication, cela signifie que le terminal de communication est en possession du matériel cryptographique transmis par l'intermédiaire du premier canal de communication unidirectionnel ; la communication entre les deux terminaux est alors sécurisée.

Selon une caractéristique particulière, la donnée de sécurisation dudit premier canal de communication est une clé de chiffrement.

Plus particulièrement, il s'agit d'une clé de chiffrement symétrique.

Cette clé peut ainsi servir de base à l'échange ultérieur entre les deux terminaux et/ou à la construction d'un crypto système encore plus performant dans une phase ultérieure, afin de garantir un maximum de sécurité dans les échanges.

Selon un mode de réalisation particulier, une représentation appartient à un type de représentation et en ce que ledit type de représentation appartient au groupe comprenant :
- une succession d'activations et de désactivation d'au moins une diode électroluminescente ;
- une séquence sonore.
- un message transmis par liaison sans fil de type NFC ou par liaison filaire.

Ainsi, un attaquant doit être nécessairement à proximité des deux terminaux pour tenter d'effectuer une capture des données transitant par le deuxième canal de communication.

Selon un mode de réalisation particulier, ledit terminal de communication est un terminal intelligent de type smartphone et en ce que ledit terminal transactionnel est un terminal de paiement esclave dudit terminal de communication.

Selon un mode de réalisation particulier ladite étape d'acquisition de ladite représentation par ledit terminal de communication sur le deuxième canal de communication comprend une étape d'acquisition d'une séquence vidéo représentative de ladite représentation.

Selon un mode de réalisation particulier ladite étape d'acquisition de ladite représentation par ledit terminal de communication sur le deuxième canal de communication comprend une étape d'acquisition d'une séquence sonore représentative de ladite représentation.

La présente technique se rapporte également, selon un autre aspect, à un terminal de communication désirant transmettre et recevoir des données avec un terminal accepteur, comprenant :
- des moyens de mise en œuvre d'une première phase d'appairage non sécurisée avec ledit terminal accepteur, par l'intermédiaire d'un premier canal de communication sans fil bidirectionnel de type radio ; et
- des moyens de mise en œuvre d'une deuxième phase d'appairage non sécurisée avec ledit terminal accepteur, deuxième canal de communication à usage unidirectionnel, comprenant :
   - des moyens de réception d'une représentation d'une donnée de sécurisation dudit premier canal de communication par l'intermédiaire du deuxième canal de communication à usage unidirectionnel ;
   - des moyens de décodage de ladite représentation acquis délivrant ladite donnée de sécurisation dudit premier canal de communication ;
   - des moyens de réception, par l'intermédiaire du premier canal de communication d'un défi ;
   - des moyens de résolution dudit défi à l'aide de ladite donnée de sécurisation dudit premier canal de communication, délivrant une ;
   - des moyens de transmission, par l'intermédiaire du premier canal de communication, de la réponse audit défi.

La présente technique se rapporte également, selon un autre aspect, à un terminal transactionnel désirant transmettre et recevoir des données avec un terminal de communication, comprenant :
- des moyens de mise en œuvre d'une première phase d'appairage non sécurisée avec ledit terminal accepteur, par l'intermédiaire d'un premier canal de communication sans fil bidirectionnel de type radio ; et
- des moyens de mise en œuvre d'une deuxième phase d'appairage non sécurisée avec ledit terminal accepteur, deuxième canal de communication à usage unidirectionnel, comprenant :
- des moyens de génération d'une donnée de sécurisation dudit premier canal de communication permettant l'appairage dudit terminal transactionnel et dudit terminal de communication ;
- des moyens de transmission, par l'intermédiaire d'un deuxième canal de communication unidirectionnel, de ladite donnée de sécurisation dudit premier canal de communication.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

### 4. Figures

D'autres caractéristiques et avantages apparaîtront plus clairement à la lecture de la description suivante d'un mode de réalisation préférentiel, donné à titre de simple exemple illustratif et non limitatif, et des dessins annexés, parmi lesquels :
- la figure 1 décrit le principe général de l'appairage sécurisé tel que proposé dans la présente ;
- la figure 2 décrit les étapes de la deuxième phase d'appairage ;
- la figure 3 est une représentation simplifiée d'un terminal transactionnel selon la présente technique ;
- la figure 4 est une représentation simplifiée terminal de communication selon la présente technique.

### 5. Description d'un mode de réalisation

Comme préalablement explicité, la présente technique offre une nouvelle méthode d'appairage sécurisé (par utilisation d'une clé de chiffrement) pour l'appairage de deux dispositifs. L'invention s'applique notamment à la technologie d'appairage Bluetooth, mais il est également possible de l'appliquer à d'autres protocoles qui comprennent des possibilités d'utilisation de deux phases d'appairage successives, l'une non sécurisée et l'autre sécurisée. Le principe étant que la deuxième phase s'effectue entre deux terminaux ayant déjà été apparié une première fois et pour la deuxième fois possédant une connexion de confiance : soit par la proximité immédiate nécessaire (message audio/visuel courte propagation, message NFC) ou filaire directe, ou encore par l'intermédiaire d'un tiers de confiance entre les deux terminaux (de type serveur qui aurait déjà un secret partagé avec chacun des éléments).

Dans un mode de réalisation particulier, qui sera décrit par la suite, la solution met en œuvre deux terminaux Bluetooth, l'un qui initie le processus d'appairage et l'autre qui l'accepte. Plus particulièrement, le processus d'appairage à lieu entre un terminal de communication intelligent, également appelé « smartphone » et un terminal de paiement subordonné. Par terminal de paiement subordonné (terminal transactionnel), on entend un terminal de paiement dont le fonctionnement est conditionné à un couplage à un terminal de communication : le terminal de paiement esclave a besoin au moins en partie de ressources fournies par le terminal de communication pour pouvoir effectuer des transactions de paiement. De tels terminaux de paiement (couplés à des terminaux de communication) équipent par exemple les professionnels en mobilité (chauffeurs de taxi, professions libérales, marchands ambulants), qui ont besoin d'un terminal de paiement peu encombrant et nécessitant peu de maintenance, déléguant une partie de la transaction au terminal de communication ou utilisant les ressources de celui-ci (par exemple des ressources de communication réseau, wifi, 3g, 4g, etc.) pour effectuer la transaction.

Par la suite, il est fait respectivement référence à un terminal de communication et à un terminal transactionnel pour désigner respectivement ces deux terminaux, étant entendu que la technique proposée peut être utilisée dans d'autres situations que celle précédemment décrite, et plus particulièrement dans toute situation ou un appairage sécurisé doit être réalisé.

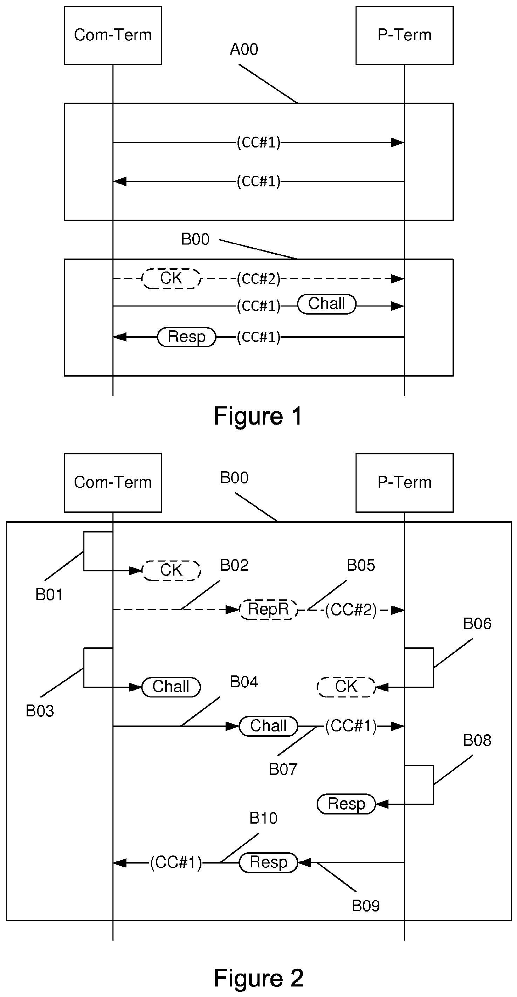

Le procédé est décrit en relation avec la figure 1. Dans ce cadre, le terminal de communication Com-Term dispose d'un récepteur électronique à usage unidirectionnel (comme par exemple : micro, périphérique permettant la lecture et le décodage d'image tels que les appareils photo embarqués sur les Smartphones ou autres dispositifs électroniques de ce type), et le terminal transactionnel P-Term dispose d'un émetteur électronique à usage unidirectionnel pour transmettre une clé par le biais de cet émetteur (le terminal transactionnel dispose plus généralement d'un moyen de restitution visuel de type LED ou sonore de type buzzer, haut-parleur). D'autres technologies de transmission unidirectionnelles (c'est-à-dire ne permettant pas une réception sur le même canal) peuvent également être envisagées. Ces technologies servent à établir le deuxième canal de communication à usage unidirectionnel, ce deuxième canal étant a priori un canal de confiance en ce qu'il est de courte distance.

Le terme de représentation utilisé ici s'entend comme tout type de restitution d'une donnée numérique ou alphanumérique sous forme visuelle ou sonore (exemple : émission de signaux lumineux, de pulsation sonores, etc.). Selon la présente technique, la représentation comprend un ensemble de données pouvant être restituées par le terminal transactionnel et acquises par le terminal de communication. Selon la présente technique, la représentation n'est pas interprétable par un humain (elle n'est pas directement lisible et compréhensible ou audible et compréhensible). Dans un mode de réalisation spécifique, la représentation se présente sou la forme d'une succession d'activations et de désactivations d'une ou plusieurs diodes électroluminescentes (LED). Dans ce mode de réalisation, le terminal de communication acquiert la succession d'activations et de désactivations de la ou des LED. À partir de cette succession d'activations et de désactivations acquises il recrée la représentation et la décode pour obtenir la donnée de sécurisation dudit premier canal de communication. Dans ce mode de réalisation, la donnée de sécurisation dudit premier canal de communication est une clé de chiffrement. Il est également envisageable que cette donnée de sécurisation dudit premier canal de communication soit d'une autre nature qu'une clé de chiffrement (comme par exemple un certificat ou une signature de données d'identification, un identifiant de terminal transactionnel) : le principe étant que la donnée de sécurisation dudit premier canal de communication puisse permettre un échange ultérieur qui soit sécurisé entre les deux terminaux, afin de renforcer la première phase d'appairage sur le premier canal de communication). Quoi qu'il en soit, dans ce mode de réalisation, il y a donc un double codage de la clé de chiffrement. Ceci est avantageux à plusieurs points de vue. D'une part, le fait que la représentation soit captable à partir de la succession d'activations et de désactivations de la ou des LED empêche un fraudeur de percevoir que ce clignotement affiché contient une des données. D'autre part, pour obtenir la clé, il est nécessaire de mettre en œuvre une méthode de découverte (de décodage) de la représentation, ce qui constitue en réalité un double codage et augmente la sécurité.

Dans le cas d'une séquence sonore, les avantages produits sont similaires. D'une part du fait que la séquence est produite à l'initiative du terminal transactionnel et qu'un fraudeur ne sait donc pas quand elle sera produite. D'autre part, comme pour le clignotement des LEDs, du fait que la séquence sonore représente à nouveau un codage de la clé de chiffrement il est donc nécessaire de réaliser un décodage pour obtenir la clé de chiffrement. En troisième lieu, la séquence sonore peut être émise sur des fréquences imperceptibles par un fraudeur de sorte qu'il est incapable de savoir quand le code est émis. En fonction des modes de réalisation, la séquence sonore pourra par exemple être une séquence DTMF. Ainsi, dans le cadre de la présente technique, lors de la deuxième phase d'appairage, il y a plusieurs types de représentations utilisables. Comme cela sera présenté postérieurement, les différents types de représentations peuvent être utilisés conjointement ou successivement, en fonction des situations.

Selon la présente technique, la première phase (A00) d'appairage s'effectue globalement en deux étapes, selon un mode non sécurisé, qui n'est pas détaillé plus avant dans la présente. A l'issue de cette première phase d'appairage non sécurisée, certaines données ont été acquises, tant par le terminal transactionnel que par le terminal de communication : il s'agit par exemple de données d'identification (adresses MAC bluetooth par exemple). Cette première phase permet aux deux terminaux de se reconnaître et de tagguer l'appairage comme étant non sécurisé. Postérieurement à cette première phase, plus ou moins immédiatement après, la deuxième phase d'appairage (B00) est mise en œuvre. Dans un mode de réalisation particulier, la première phase d'appairage est une phase de type « Simple Works ».

Selon la présente technique, la deuxième phase (B00) d'appairage s'effectue globalement en deux étapes :
- le terminal transactionnel P-Term, restitue (clignotement de LEDs ou émissions sonores) les représentations REPRS de la clé de chiffrement; en complément, d'autres paramètres peuvent également être restitué (adresse du terminal transactionnel par exemple, cet aspect est détaillé par la suite)
- le terminal de communication Com-Term acquiert (par lecture vidéo ou reconnaissance audio) la clé de chiffrement l'aide du lecteur de représentations.

Il n'y a donc aucune saisie nécessaire, ni du côté du terminal de communication, ni du côté du terminal accepteur, ce qui permet de simplifier et d'accélérer le processus (gage de sécurité supplémentaire). Au moins un paramètre d'appairage audit terminal de communication est utilisé par le terminal transactionnel lors de la deuxième phase : il peut s'agir de l'adresse MAC du terminal de communication, d'une clé publique du terminal de communication, d'un identifiant du terminal de communication. Ce paramètre d'appairage au terminal de communication peut être utilisé de différentes manières (cumulables ou non) par le terminal transactionnel : pour générer la clé de chiffrement par exemple, ou encore pour chiffrer le message transmis au terminal de communication par l'intermédiaire du deuxième canal, ou encore pour mettre à jour une liste (interne au terminal transactionnel) d'appairage au sein de la mémoire du terminal transactionnel, cette liste permettant au terminal transactionnel d'identifier les terminaux de communication avec lesquels il dispose d'un appairage, sécurisé ou non. Ainsi, ce paramètre d'appairage audit terminal de communication peut être uniquement conservé en mémoire du terminal transactionnel pour de futurs usages.

Un mécanisme de validation d'appairage basé sur un échange de défis/réponses avec authentification est alors initié et les deux terminaux sont alors connectés :
- le terminal transactionnel P-Term construit un défi à partir de la clé de chiffrement qui vient de transmettre par le canal de communication unidirectionnel (LED, Buzzer) et transmet ce défi par le biais du premier canal de communication (bluetooth) ;
- le terminal de communication Com-Term réceptionne ce défi par le biais du premier canal de communication puis effectue les opérations nécessaires à la construction de son propre défi (éventuellement en utilisant les informations contenues dans le premier défi déchiffré) et le transmet au terminal transactionnel P-Term.

Lorsque ces échanges de défis/réponses se déroulent comme escompté tant de la part du terminal transactionnel que du terminal de communication, l'appairage est considéré comme étant sécurisé.

Selon la présente technique, il est important d'avoir réalisé une première phase d'appairage non sécurisé préalablement à la deuxième phase d'appairage sécurisé. En effet, cette première phase d'appairage permet aux deux terminaux d'échanger des données, et notamment des données d'identification (par exemple les adresses MAC des terminaux), afin d'effectuer une pré-reconnaissance (il s'agit d'une sorte de « handshake » non sécurisé). L'avantage intéressant de cette méthode est que comme les terminaux se sont déjà appariés, il est possible de poursuivre le dialogue avec les ressources qui ont été précédemment réservées lors de ce premier appairage. En quelque sorte, on profite d'un appairage déjà effectué pour sécuriser celui-ci en utilisant un deuxième canal de communication, inaccessible pour un attaquant. Eventuellement, la transmission de la clé de chiffrement (ou d'autre donnée de sécurisation) peut elle-même être chiffrée par une clé publique du terminal de communication, lequel transmet cette clé publique par le premier canal non sécurisé lors de la première phase d'appairage : cette clé publique fait alors partie des paramètres d'appairage audit terminal de communication, comme par exemple la clé MAC du terminal de communication, un identifiant du terminal de communication (IMEI, IMSI, autre identifiant). Cela renforce la sécurité de la solution proposée mais également permet de ne pas transmettre un code directement mais une donnée chiffrée.

Plus particulièrement, la deuxième phase d'appairage (B00) en relation avec la figure 2. Comme exposé, cette deuxième phase comprend des étapes mises en œuvre par le terminal de communication (Com-Term) et par le terminal esclave (P-Term).
- une étape de génération (B01) de la clé de chiffrement (CK) ;
- une épate de transmission (B02), par l'intermédiaire du deuxième canal de communication à usage unidirectionnel (CC#2), de ladite clé de chiffrement (CK) sous la forme d'une représentation (REPRS) ;
- une étape de génération (B03) d'un défi (Chall) à l'aide de ladite clé de chiffrement (CK) ;
- une étape de transmission (B04), par l'intermédiaire du premier canal de communication, audit terminal de communication, dudit défi (Chall) ;
- une épate de réception (B05), par l'intermédiaire du deuxième canal de communication à usage unidirectionnel, d'une représentation (REPRS) de ladite clé de chiffrement (CK) ;
- une étape de décodage (B06) de ladite représentation (REPRS) délivrant ladite clé de chiffrement (CK),
- une étape de réception (B07), par l'intermédiaire du premier canal de communication dudit défi (Chall) ;
- une étape de résolution (B08) dudit défi (Chall) à l'aide de ladite clé de chiffrement (CK), délivrant une (Resp) ; et
- une étape de transmission (B09), par l'intermédiaire du premier canal de communication, de la réponse (Resp) audit défi (Chall).
- une étape de réception (B10), par l'intermédiaire du premier canal de communication, d'une réponse (Resp) audit défi (Chall) en provenance du terminal de communication.

Si cette deuxième phase d'appairage échoue (en d'autre termes le terminal de communication ne dispose pas des données nécessaires pour répondre au défi), l'identifiant de ce terminal est « révoqué » (marqué comme « non sécurisé ») et le terminal transactionnel (terminal de paiement) ne se basera pas sur ce terminal pour effectuer échanger des données (par exemple effectuer des transactions de paiement). Avantageusement, en préambule de cette deuxième phase, le deuxième terminal, qui s'apprête à débuter la phase de transmission sécurisée, limite la puissance d'émission radio du premier canal de transmission (par exemple pour le bluetooth, il passe en classe trois et la puissance est limitée à un mètre) : l'avantage est de ne pas permettre à l'attaquant potentiel de capturer des données échangées tout en étant à longue distance des deux terminaux.

La clé de chiffrement est générée B10 de manière aléatoire sur le terminal transactionnel et est composé du maximum de caractère possible, ce qui assure un niveau de sécurité élevé sur la liaison entre les deux terminaux. Dans le cas d'une application utilisant la technologie Bluetooth par exemple, la clé de chiffrement comprend entre 64 et 256 bits, et plus particulièrement 128 bits. Dans ce mode de réalisation, la clé de chiffrement est une clé symétrique, utilisable tant par le terminal transactionnel que le terminal de communication pour chiffrer les échanges. Cette clé de chiffrement symétrique peut par la suite être utilisée pour construire, entre les deux terminaux, un crypto système à base de clés asymétriques.

De plus la clé de chiffrement est générée de manière asynchrone, antérieurement ou postérieurement à la décision de l'appairage du terminal de communication Com-Term, avec le terminal transactionnel P-Term et n'est donc pas stockée en mémoire non volatile dans le terminal transactionnel P-Term. La décision est prise lors de la première phase d'appairage. La clé de chiffrement est aléatoire et volatile.

Lorsque deux terminaux sont déjà appariés, on peut également établir un nouvel appairage avec une nouvelle clé de chiffrement aléatoire, ce qui permet de modifier les clés de chiffrement de manière périodique et permet donc d'augmenter encore la sécurité de ce lien.

L'invention a été décrite dans un mode de réalisation particulier. Il est bien entendu que l'invention ne se limite nullement à ce mode de réalisation. L'invention porte également sur les terminaux qui sont employés pour permettre l'appairage tel qu'il a été préalablement décrit. Plus particulièrement, l'invention se rapporte à un terminal accepteur, de type terminal de paiement. Le terminal transactionnel comprend, selon la présente technique : des moyens d'appairage non sécurisés (se présentant par exemple sous la forme d'un protocole d'appairage standard implémenté dans un module logiciel), des moyens de génération d'une clé de chiffrement en réponse à une première phase d'appairage non sécurisée, des moyens de restitution, sous la forme d'une représentation, de la clé de chiffrement..

L'ensemble de ces moyens sont pilotés par un programme d'ordinateur spécifiquement adapté, en fonction d'un protocole d'appairage initial, pour générer une clé de chiffrement, la transformer en une représentation et restituer cette représentation. Le programme d'ordinateur comprend en outre une phase de suspension de l'appairage tant que la procédure d'appairage n'a pas été complétée au niveau du terminal de communication.

L'invention se rapporte également à un terminal de communication, de type smartphone. Le terminal de communication comprend, Selon la présente technique :des moyens d'obtention de représentation d'une clé de chiffrement en réponse à une première phase d'appairage non sécurisée, des moyens de décodage de la représentation acquise délivrant une clé de chiffrement. Ces moyens d'obtention peuvent, comme cela a été indiqué, consister en un capteur optique, une caméra, un micro.

L'ensemble de ces moyens sont pilotés par un programme d'ordinateur spécifiquement adapté, en fonction d'un protocole d'appairage initial, pour obtenir un ou plusieurs représentations, les décoder en une clé de chiffrement et mettre en œuvre l'appairage subséquent (défis/réponses). Le programme d'ordinateur comprend en outre une phase de suspension de l'appairage tant que la procédure d'appairage n'a pas été complétée au niveau du terminal accepteur.

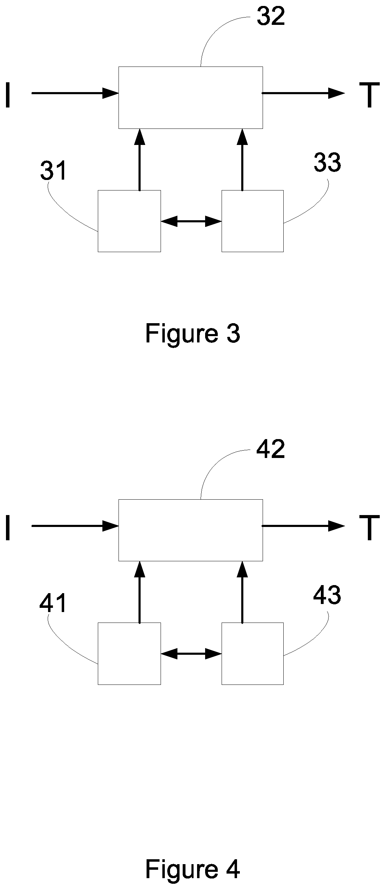

On présente, en relation avec la figure 3, un mode de réalisation d'un terminal transactionnel Selon la présente technique.

Un tel terminal transactionnel comprend une mémoire 31 constituée d'une mémoire tampon, une unité de traitement 32, équipée par exemple d'un microprocesseur P, et pilotée par le programme d'ordinateur 33, mettant en œuvre le procédé de modification Selon la présente technique.

À l'initialisation, les instructions de code du programme d'ordinateur 33 sont par exemple chargées dans une mémoire RAM avant d'être exécutées par le processeur de l'unité de traitement 32. L'unité de traitement 32 reçoit en entrée au moins une information I, telle qu'une décision d'appairage. Le microprocesseur de l'unité de traitement 32 met en œuvre les étapes du procédé d'appairage décrit précédemment, selon les instructions du programme d'ordinateur 33, pour délivrer une information traitée T, telle que le ou les représentations nécessaires à l'appairage du terminal. Pour cela, le terminal comprend, outre la mémoire tampon 31, les moyens préalablement décrits. Ces moyens sont pilotés par le microprocesseur de l'unité de traitement 32.

On présente, en relation avec la figure 4, un mode de réalisation d'un terminal de communication Selon la présente technique.

Un tel dispositif comprend une mémoire 41 constituée d'une mémoire tampon, une unité de traitement 42, équipée par exemple d'un microprocesseur P, et pilotée par le programme d'ordinateur 43, mettant en œuvre le procédé d'appairage selon la présente technique.

À l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée au moins une information I, telle qu'une représentation en provenance d'un terminal accepteur. Le microprocesseur de l'unité de traitement 42 met en œuvre les étapes du procédé de modification décrit précédemment, selon les instructions du programme d'ordinateur 43, pour délivrer une information traitée T, telle que la clé de chiffrement. Pour cela, le dispositif comprend, outre la mémoire tampon 41, les moyens préalablement décrits. Ces moyens sont pilotés par le microprocesseur de l'unité de traitement 42.

Comme cela a été parfaitement compris, le procédé d'appairage tel qu'il a été précédemment décrit comprend en fait un premier sous procédé d'appairage qui est mis en œuvre sur le terminal de communication et un deuxième sous procédé d'appairage qui est mis en œuvre sur le terminal accepteur.

## Revendications

1. Méthode d'appairage d'un premier terminal, dit terminal de communication (Com-Term) désirant transmettre et recevoir des données avec un deuxième terminal, dit terminal transactionnel (P-Term), ledit procédé comprenant :
- une première phase d'appairage non sécurisé (A00), dudit terminal transactionnel avec ledit terminal de communication, délivrant au moins un paramètre d'appairage audit terminal de communication (Com-Term), par l'intermédiaire d'un premier canal de communication (CC#1) sans fil bidirectionnel de type radio ;
- une deuxième phase d'appairage (B00), dudit terminal transactionnel (P-Term) avec ledit terminal de communication (Com-Term), ladite deuxième phase d'appairage comprenant :
∘ la limitation, par ledit terminal transactionnel, de la puissance d'émission radio du premier canal de transmission ;
∘ la mise en œuvre d'un deuxième canal de communication à usage unidirectionnel (CC#2), utilisé par ledit terminal transactionnel pour transmettre une donnée de sécurisation dudit premier canal de communication (CK) audit terminal de communication (Com-Term), en fonction dudit au moins un paramètre d'appairage audit terminal de communication, ladite donnée de sécurisation étant transmise sous la forme d'une représentation de type séquence visuelle ou sonore ;
∘ la transmission, par ledit terminal transactionnel audit terminal de communication, par l'intermédiaire du premier canal de communication à puissance d'émission radio limitée, d'un défi (Chall) généré en fonction de ladite donnée de sécurisation.

2. Méthode d'appairage selon la revendication 1, **caractérisé en ce que** ladite deuxième phase d'appairage (B00) comprenant, au niveau dudit terminal transactionnel (P-Term) :
- une étape de génération (B01) de la donnée de sécurisation dudit premier canal de communication (CK) ;
- une étape de transmission (B02), par l'intermédiaire du deuxième canal de communication à usage unidirectionnel (CC#2), de ladite donnée de sécurisation dudit premier canal de communication (CK) sous la forme d'une représentation (REPRS) ;
- une étape de génération (B03) dudit (Chall) à l'aide de ladite donnée de sécurisation dudit premier canal de communication (CK) ;
- une étape de transmission (B04), par l'intermédiaire du premier canal de communication, audit terminal de communication, dudit défi (Chall) ;
- une étape de réception (B10), par l'intermédiaire du premier canal de communication, d'une réponse (Resp) audit défi (Chall) en provenance du terminal de communication.

3. Méthode d'appairage selon la revendication 1, **caractérisé en ce que** ladite deuxième phase d'appairage (B00) comprenant, au niveau dudit terminal de communication (Com-term) :
- une étape de réception (B05), par l'intermédiaire du deuxième canal de communication à usage unidirectionnel, d'une représentation (REPRS) de ladite donnée de sécurisation dudit premier canal de communication (CK) ;
- une étape de décodage (B06) de ladite représentation (REPRS) délivrant ladite donnée de sécurisation dudit premier canal de communication (CK),
- une étape de réception (B07), par l'intermédiaire du premier canal de communication dudit défi (Chall) ;
- une étape de résolution (B08) dudit défi (Chall) à l'aide de ladite donnée de sécurisation dudit premier canal de communication (CK), délivrant une réponse (Resp) ; et
- une étape de transmission (B09), par l'intermédiaire du premier canal de communication, de la réponse (Resp) audit défi (Chall).

4. Méthode d'appairage selon la revendication 1, **caractérisé en ce que** la donnée de sécurisation dudit premier canal de communication (CK) est une clé de chiffrement.

5. Méthode d'appairage selon la revendication 4, **caractérisé en ce que** ladite clé de chiffrement (CK) est une clé de chiffrement symétrique.

6. Méthode d'appairage selon la revendication 1, **caractérisée en ce qu'**une représentation appartient à un type de représentation et **en ce que** ledit type de représentation appartient au groupe comprenant :
- une succession d'activations et de désactivation d'au moins une diode électroluminescente ;
- une séquence sonore.

7. Méthode d'appairage selon la revendication 1 à 6, **caractérisé en ce que** ledit terminal de communication est un terminal intelligent de type smartphone et **en ce que** ledit terminal transactionnel est un terminal de paiement esclave dudit terminal de communication.

8. Méthode selon la revendication 7, **caractérisé en ce que** ladite étape d'acquisition de ladite représentation par ledit terminal de communication comprend une étape d'acquisition d'une séquence vidéo représentative de ladite représentation.

9. Terminal de communication initiateur désirant transmettre et recevoir des données avec un terminal accepteur, comprenant :
- des moyens de mise en œuvre d'une première phase d'appairage non sécurisée avec ledit terminal accepteur, par l'intermédiaire d'un premier canal de communication (CC#1) sans fil bidirectionnel de type radio ; et
- des moyens de mise en œuvre d'une deuxième phase d'appairage non sécurisée avec ledit terminal accepteur, deuxième canal de communication à usage unidirectionnel (CC#2), comprenant :
- des moyens de réception d'une représentation (RepRs) d'une donnée de sécurisation dudit premier canal de communication (Ck) par l'intermédiaire du deuxième canal de communication à usage unidirectionnel (CC#2) sous la forme d'une représentation de type séquence visuelle ou sonore ;
- des moyens de décodage de ladite représentation acquis délivrant ladite donnée de sécurisation dudit premier canal de communication ;
- des moyens de réception, par l'intermédiaire du premier canal de communication (CC#1), à une puissance radio limité, d'un défi (Chall) ;
- des moyens de résolution dudit défi (Chall) à l'aide de ladite donnée de sécurisation dudit premier canal de communication (CK), délivrant une réponse (Resp) ;
- des moyens de transmission, par l'intermédiaire du premier canal de communication (CC#1), de la réponse (Resp) audit défi (Chall).

10. Terminal accepteur désirant transmettre et recevoir des données avec un terminal de communication, comprenant :
- des moyens de mise en œuvre d'une première phase d'appairage non sécurisée avec ledit terminal accepteur, par l'intermédiaire d'un premier canal de communication (CC#1) sans fil bidirectionnel de type radio ; et
- des moyens de mise en œuvre d'une deuxième phase d'appairage non sécurisée avec ledit terminal accepteur, deuxième canal de communication à usage unidirectionnel (CC#2), comprenant :
- des moyens de limitation de la puissance d'émission radio du premier canal de transmission ;
- des moyens de génération d'une donnée de sécurisation dudit premier canal de communication permettant l'appairage dudit terminal transactionnel et dudit terminal de communication ;
- des moyens de transmission, par l'intermédiaire d'un deuxième canal de communication unidirectionnel, de ladite donnée de sécurisation dudit premier canal de communication audit terminal de communication, ladite donnée de sécurisation étant transmise sous la forme d'une représentation de type séquence visuelle ou sonore ;
- des moyens de transmission audit terminal de communication, par l'intermédiaire dudit premier canal de communication à puissance d'émission radio limitée, d'un défi généré en fonction de ladite donnée de sécurisation .

11. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'une méthode d'appairage selon la revendication 1 à 8, lorsqu'il est exécuté par un processeur.

## Patentansprüche

1. Verfahren zum Pairing eines ersten Endgeräts, das Kommunikationsendgerät (Com-Term) genannt wird, das Daten übertragen und empfangen möchte, mit einem zweiten Endgerät, das Transaktionsendgerät (P-Term) genannt wird, wobei das Verfahren umfasst:
- eine erste Phase des nicht gesicherten Pairings (A00) des Transaktionsendgeräts mit dem Kommunikationsendgerät, wobei mindestens ein Pairing-Parameter über einen ersten bidirektionalen drahtlosen Funk-Kommunikationskanal (CC#1) dem Kommunikationsendgerät (Com-Term) bereitgestellt wird;
- eine zweite Phase des Pairings (B00) des Transaktionsendgeräts (P-Term) mit dem Kommunikationsendgerät (Com-Term), wobei die zweite Phase des Pairings umfasst:
∘ das Begrenzen der Funkübertragungsleistung des ersten Übertragungskanals durch das Transaktionsendgerät;
∘ das Umsetzen eines zweiten Kommunikationskanals zur unidirektionalen Nutzung (CC#2), der von dem Transaktionsendgerät verwendet wird, um Sicherheitsdaten des ersten Kommunikationskanals (CK) an das Kommunikationsendgerät (Com-Term) in Abhängigkeit von dem mindestens einen Pairing-Parameter mit dem Kommunikationsendgerät zu übertragen, wobei die Sicherheitsdaten in Form einer Darstellung vom Typ der visuellen oder akustischen Sequenz übertragen werden;
∘ das Übertragen einer Herausforderung (Chall), die in Abhängigkeit von den Sicherheitsdaten generiert wird, über den ersten Kommunikationskanal mit begrenzter Funkübertragungsleistung durch das Transaktionsendgerät an das Kommunikationsendgerät.

2. Verfahren zum Pairing nach Anspruch 1, **dadurch gekennzeichnet, dass** die zweite Phase des Pairings (B00) auf Ebene des Transaktionsendgeräts (P-Term) umfasst:
- einen Schritt des Erzeugens (B01) der Sicherheitsdaten des ersten Kommunikationskanals (CK);
- einen Schritt des Übertragens (B02) der Sicherheitsdaten des ersten Kommunikationskanals (CK) in Form einer Darstellung (REPRS) über den zweiten Kommunikationskanal zur unidirektionalen Nutzung (CC#2);
- einen Schritt des Erzeugens (B03) der (Chall) mit Hilfe der Sicherheitsdaten des ersten Kommunikationskanals (CK);
- einen Schritt des Übertragens (B04) der Herausforderung (Chall) über den ersten Kommunikationskanal an das Kommunikationsendgerät;
- einen Schritt des Empfangens (B10) einer Antwort (Resp) auf die Herausforderung (Chall) von dem Kommunikationsendgerät über den ersten Kommunikationskanal.

3. Verfahren zum Pairing nach Anspruch 1, **dadurch gekennzeichnet, dass** die zweite Phase des Pairings (B00) auf Ebene des Kommunikationsendgeräts (Com-term) umfasst:
- einen Schritt des Empfangens (B05) über den zweiten Kommunikationskanal zur unidirektionalen Nutzung einer Darstellung (REPRS) der Sicherheitsdaten des ersten Kommunikationskanals (CK) ;
- einen Schritt des Dekodierens (B06) der Darstellung (REPRS), der die Sicherheitsdaten des ersten Kommunikationskanals (CK) bereitstellt,
- einen Schritt des Empfangens (B07) der Herausforderung (Chall) über den ersten Kommunikationskanal;
- einen Schritt des Lösens (B08) der Herausforderung (Chall) mit Hilfe der Sicherheitsdaten des ersten Kommunikationskanals (CK), der eine Antwort (Resp) bereitstellt; und
- einen Schritt des Übertragens (B09) der Antwort (Resp) auf die Herausforderung (Chall) über den ersten Kommunikationskanal.

4. Verfahren zum Pairing nach Anspruch 1, **dadurch gekennzeichnet, dass** die Sicherheitsdaten des ersten Kommunikationskanals (CK) ein Verschlüsselungsschlüssel sind.

5. Verfahren zum Pairing nach Anspruch 4, **dadurch gekennzeichnet, dass** der Verschlüsselungsschlüssel (CK) ein symmetrischer Verschlüsselungsschlüssel ist.

6. Verfahren zum Pairing nach Anspruch 1, **dadurch gekennzeichnet, dass** eine Darstellung zu einem Darstellungstyp gehört und dass der Darstellungstyp zu der Gruppe gehört, umfassend:
- eine Abfolge von Aktivierungen und Deaktivierungen von mindestens einer Leuchtdiode;
- eine akustische Sequenz.

7. Verfahren zum Pairing nach Anspruch 1 bis 6, **dadurch gekennzeichnet, dass** das Kommunikationsendgerät ein intelligentes Endgerät vom Typ Smartphone ist und dass das Transaktionsendgerät ein Zahlungsendgerät ist, das ein Slave-Gerät des Kommunikationsendgeräts ist.

8. Verfahren nach Anspruch 7, **dadurch gekennzeichnet, dass** der Schritt des Erfassens der Darstellung durch das Kommunikationsendgerät einen Schritt des Erfassens einer Videosequenz umfasst, die für die Darstellung repräsentativ ist.

9. Initiator-Kommunikationsendgerät, das Daten an ein Empfangsendgerät übertragen und von diesem empfangen möchte, umfassend:
- Mittel zum Umsetzen einer ersten Phase eines nicht gesicherten Pairings mit dem Empfangsendgerät über einen ersten bidirektionalen drahtlosen Funk-Kommunikationskanal (CC#1); und
- Mittel zum Umsetzen einer zweiten Phase eines nicht gesicherten Pairings mit dem Empfangsendgerät, wobei der zweite Kommunikationskanal zur unidirektionalen Nutzung (CC#2) umfasst:
- Mittel zum Empfangen einer Darstellung (RepRs) der Sicherheitsdaten des ersten Kommunikationskanals (Ck) über den zweiten Kommunikationskanal zur unidirektionalen Nutzung (CC#2) in Form einer Darstellung vom Typ der visuellen oder akustischen Sequenz;
- Mittel zum Dekodieren der erfassten Darstellung, die die Sicherheitsdaten des ersten Kommunikationskanals bereitstellen;
- Mittel zum Empfangen einer Herausforderung (Chall) über den ersten Kommunikationskanal (CC#1) mit begrenzter Funkübertragungsleistung;
- Mittel zum Lösen der Herausforderung (Chall) mit Hilfe der Sicherheitsdaten des ersten Kommunikationskanals (CK), wobei eine Antwort (Resp) bereitgestellt wird;
- Mittel zum Übertragen der Antwort (Resp) auf die Herausforderung (Chall) über den ersten Kommunikationskanal (CC#1).

10. Empfangsendgerät, das Daten an ein Kommunikationsendgerät übertragen und von diesem empfangen möchte, umfassend:
- Mittel zum Umsetzen einer ersten Phase eines nicht gesicherten Pairings mit dem Empfangsendgerät über einen ersten bidirektionalen drahtlosen Funk-Kommunikationskanal (CC#1); und
- Mittel zum Umsetzen einer zweiten Phase eines nicht gesicherten Pairings mit dem Empfangsendgerät, wobei der zweite Kommunikationskanal zur unidirektionalen Nutzung (CC#2) umfasst:
- Mittel zum Begrenzen der Funkübertragungsleistung des ersten Übertragungskanals;
- Mittel zum Erzeugen der Sicherheitsdaten des ersten Kommunikationskanals, die das Pairing des Transaktionsendgeräts und des Kommunikationsendgeräts ermöglichen;
- Mittel zum Übertragen der Sicherheitsdaten des ersten Kommunikationskanals über einen zweiten unidirektionalen Kommunikationskanal an das Kommunikationsendgerät, wobei die Sicherheitsdaten in Form einer Darstellung vom Typ der visuellen oder akustischen Sequenz übertragen werden;
- Mittel zum Übertragen einer Herausforderung, die in Abhängigkeit von den Sicherheitsdaten generiert wird, über den ersten Kommunikationskanal mit begrenzter Funkübertragungsleistung an das Kommunikationsendgerät.

11. Computerprogrammprodukt, das von einem Kommunikationsnetz herunterladbar ist und/oder auf einem computerlesbaren Aufzeichnungsmedium gespeichert ist und/oder von einem Mikroprozessor ausführbar ist, **dadurch gekennzeichnet, dass** es Programmcodeanweisungen zum Ausführen eines Verfahrens zum Pairing nach Anspruch 1 bis 8 aufweist, wenn es von einem Prozessor ausgeführt wird.

## Claims

1. A method for pairing a first terminal, referred to as a communication terminal (Com-Term), seeking to transmit and receive data with a second terminal, referred to as a transactional terminal (P-Term), wherein said method includes:
- an unsecured first pairing phase (A00) for pairing said transactional terminal with said communication terminal, delivering at least one pairing parameter for pairing to said communication terminal (Com-Term) via a bidirectional wireless radio first communication channel (CC#1);
- a second pairing phase (B00) for pairing said transactional terminal (P-Term) with said communication terminal (Com-Term), wherein said second pairing phase includes:
∘ limitation of the radio transmission power of the first transmission channel by said transactional terminal;
∘ implementation of a unidirectional second communication channel (CC#2), which is used by said transactional terminal to transmit security data for securing said first communication channel (CK) to said communication terminal (Com-Term), as a function of said at least one pairing parameter for pairing to said communication terminal, wherein said security data is transmitted in the form of a representation in the form of a visual or audio sequence;
∘ transmission, by said transactional terminal to said communication terminal, via the first communication channel with a limited radio transmission power, of a challenge (Chall) generated as a function of said security data.

2. A pairing method according to claim 1, **characterised in that** said second pairing phase (B00) includes, at said transactional terminal (P-Term):
- a step of generating (B01) the security data for securing said first communication channel (CK);
- a step of transmitting (B02), via the unidirectional second communication channel (CC#2), said security data for securing said first communication channel (CK) in the form of a representation (REPRS);
- a step of generating (B03) said challenge (Chall) using said security data for securing said first communication channel (CK);
- a step of transmitting (B04), via the first communication channel, said challenge (Chall) to said communication terminal;
- a step of receiving (B10), via the first communication channel, a response (Resp) to said challenge (Chall) from the communication terminal.

3. A pairing method according to claim 1, **characterised in that** said second pairing phase (B00) includes, at said communication terminal (Com-term):
- a step of receiving (B05), via the unidirectional second communication channel, a representation (REPRS) of said security data for securing said first communication channel (CK);
- a step of decoding (B06) said representation (REPRS), delivering said security data for securing said first communication channel (CK),
- a step of receiving (B07), via the first communication channel, said challenge (Chall);
- a step of solving (B08) said challenge (Chall) using said security data for securing said first communication channel (CK), delivering a response (Resp); and
- a step of transmitting (B09), via the first communication channel, the response (Resp) to said challenge (Chall).

4. A pairing method according to claim 1, **characterised in that** the security data for securing said first communication channel (CK) is an encryption key.

5. A pairing method according to claim 4, **characterised in that** said encryption key (CK) is a symmetric encryption key.

6. A pairing method according to claim 1, **characterised in that** a representation belongs to a representation type and **in that** said representation type belongs to the group including:
- a succession of activations and deactivations of at least one light-emitting diode;
- an audio sequence.

7. A pairing method according to claims 1 to 6, **characterised in that** said communication terminal is a smartphone-type intelligent terminal and **in that** said transactional terminal is a slave payment terminal of said communication terminal.

8. A method according to claim 7, **characterised in that** said step of acquiring said representation by said communication terminal includes a step of acquiring a video sequence representative of said representation.

9. An initiator communication terminal seeking to transmit and receive data with an acceptor terminal, including
- means for implementing a first unsecured pairing phase for pairing with said acceptor terminal, via a bidirectional wireless radio first communication channel (CC#1); and
- means for implementing a second unsecured pairing phase for pairing with said acceptor terminal, via a unidirectional second communication channel (CC#2), including:
∘ means for receiving a representation (RepRs) of security data for securing said first communication channel (Ck) via the unidirectional second communication channel (CC#2) in the form of a representation in the form of a visual or audio sequence;
∘ means for decoding said acquired representation, delivering said security data for securing said first communication channel;
∘ means for receiving a challenge (Chall) via the first communication channel (CC#1) with a limited radio power,
∘ means for solving said challenge (Chall) using said security data for securing said first communication channel (CK), which delivering a response (Resp);
∘ means for transmitting, via the first communication channel (CC#1), the response (Resp) to said challenge (Chall).

10. An acceptor terminal seeking to transmit and receive data with a communication terminal, including:
- means for implementing a first unsecured pairing phase for pairing with said acceptor terminal, via a bidirectional wireless radio first communication channel (CC#1); and
- means for implementing a second unsecured pairing phase for pairing with said acceptor terminal, via a unidirectional second communication channel (CC#2), including:
- means for limiting the radio transmission power of the first transmission channel;
- means for generating security data for securing said first communication channel enabling the pairing of said transactional terminal and said communication terminal;
- means for transmitting, via a unidirectional second communication channel, said security data for securing said first communication channel to the communication terminal, wherein said security data is transmitted in the form of a representation in the form of a visual or audio sequence;
- means for transmitting to said communication terminal, via the first communication channel with a limited radio transmission power, a challenge generated as a function of said security data.

11. A computer program product downloadable from a communications network and/or stored on a computer-readable medium and/or executable by a microprocessor, **characterised in that** it includes program code instructions for executing a pairing method according to claims 1 to 8 when it is executed by a processor.
